**Europäisches Patentamt**

**European Patent Office**

**Office européen des brevets**

(11) Publication number: **0 372 866 B1**

# EUROPEAN PATENT SPECIFICATION

(45) Date of publication of patent specification: **27.07.94**    (51) Int. Cl.⁵: **C08L  77/00**, //(C08L77/00, 51:06)

(21) Application number: **89312584.9**

(22) Date of filing: **01.12.89**

The file contains technical information submitted after the application was filed and not included in this specification

(54) **Use of a Nylon/grafted polyolefine release film for sheet moulding compound.**

(30) Priority: **05.12.88 GB 8828350**

(43) Date of publication of application:
**13.06.90 Bulletin  90/24**

(45) Publication of the grant of the patent:
**27.07.94 Bulletin  94/30**

(84) Designated Contracting States:
**DE ES FR GB IT SE**

(56) References cited:
**EP-A- 0 027 191**
**EP-A- 0 272 695**

**PATENT ABSTRACTS OF JAPAN, vol. 12, no. 306 (C-522)[3153], 19th August 1988,page 69 C 522; & JP-A-63 77 943**

(73) Proprietor: **Du Pont Canada Inc.**
**Box 2200,**
**Streetsville Postal Station**
**Mississauga, Ontario L5M 2H3(CA)**

(72) Inventor: **Sipos, Peter Andrew**
**637 Pimlico Place**
**Kingston Ontario K7M 5T7(CA)**

(74) Representative: **Harrison, David Christopher et al**
**MEWBURN ELLIS**
**York House**
**23 Kingsway**
**London WC2B 6HP (GB)**

**Description**

The present invention relates to the use of an extruded film made from a blend of nylon and a grafted polyolefin as a release film of a sheet moulding compound (SMC) composite, and a method of making SMC composite with such a film.

SMC is used in the manufacture of shaped articles such as body parts for cars, e.g. body panels, bumpers and fenders, body parts for boats, housings for electric and electronic components, e.g. housings for personal computers, switch boxes and the like. Sheet moulding compound generally comprises a crosslinkable polyester resin containing fibre reinforcement, e.g. glass fibres. The sheet moulding compound is usually manufactured by depositing the fibres onto a layer of uncrosslinked polyester resin which is supported on a moving support bed, e.g. a polyethylene or nylon film. Another film is placed on top of the resin/fibre composite to form a sandwich of the composite between two films. The sandwich is then passed through a series of rollers whose function is to knead the fibre and resin and cause thorough mixing of the fibre and resin. The sandwich is then wound up on rolls or cut to conveniently sized pieces and stored at ambient temperature ready for further processing. During the storage period the polyester resin partially crosslinks, causing an increase in the viscosity of the sheet moulding compound, until the compound is at a mouldable consistency. The users of the sandwich, i.e. moulders, cut a suitable length of the sandwich from a roll, strip the film from the sheet moulding compound prior to placing the sheet moulding compound in a suitably shaped mould, and then apply pressure and heat to achieve a full "cure", i.e. to fully crosslink, the polyester resin thermoset material. It is desirable that the films, which are usually known as release films, strip from the sheet moulding compound cleanly.

Two properties in particular are of importance to manufacturers and users of sheet moulding compound. The first is that of styrene permeability of the release film. It is desirable that the release film has sufficiently low styrene permeability to prevent undue loss of styrene monomer, which acts as a crosslinking agent for the polyester, from the sandwich. The second is that the release film should be easily peelable from the sheet moulding compound.

As indicated hereinabove polyethylene has been used as a release film for sheet moulding compound. Although the release characteristics of polyethylene are good enough for automated stripping operations, it has poor styrene permeability properties and rolls of sheet moulding compound are usually also wrapped in aluminium foil or a nylon film to prevent loss of styrene monomer.

In U.S. Patent 4 444 829, which issued 1984 April 24 to Bollen, Degrassi and Sacks, there is described a low crystallinity polyamide film comprising a blend of 90 to 70 wt.% of a polyamide having a crystallinity of less than 35% and 10 to 30 wt.% of a polyolefin component. The polyolefin component, which is a linear high molecular weight polymer of alpha-olefins, copolymer of alpha-olefin and vinyl acetate monomers or an alkyl acrylate, has a crystallinity of less than 50%. The film thickness is from about 12.7 to 127 $\mu$m, has a Graves tear strength of at least about 400 g in the longitudinal direction and a styrene permeability of below about $200 \times 10^{-9}$ g.cm/cm$^2$.h.

Some commercially available polyamide release films, while having sufficiently good styrene permeability characteristics, tend to have release properties which, while suited to manual stripping operations, are less suited for automated stripping operations. In manual stripping operations care must be exercised to ensure that the release film strips cleanly away from the sheet moulding compound and to ensure that the release film does not rip. The present invention provides alternatives to the currently-used commercial polyamide-based release films and, in some instances provides release films which are more suited for use in automated stripping operations.

On the other hand, EP-A-0272695 discloses polyamide compositions in which a toughening agent may be a grafted $C_{3-6}$ alpha-olefin polymer. The purpose is to lower the melt viscosity so that the composition may be moulded at low pressure. It is stated that for certain tests, films of the compositions are used.

The present invention provides the use of a film made from a blend comprising from 5 to 25 wt.% of a grafted $C_2$-$C_{20}$ alpha-olefin copolymer and from 95 to 75 wt.% of an aliphatic polyamide, the melt viscosities of said polyamide and grafted copolymer being selected such that the blend is homogeneous, as a release film of a sheet moulding compound (SMC) composite.

The present invention also provides a method of forming a SMC composite comprising applying a film made from an extruded blend comprising from 5 to 25 wt.% of a grafted $C_2$-$C_{20}$ alpha-olefin polymer and from 95 to 75 wt.% of an aliphatic polyamide, the melt viscosities of said polyamide and graft polyolefin being selected such that the blend is homogeneous, as at least one of the release sheets of the composite.

In one embodiment the aliphatic polyamide is made from an aliphatic dicarboxylic acid and an aliphatic diamine, each having from 6 to 24 carbon atoms.

In another embodiment the aliphatic polyamide is made from an aliphatic aminoacid or lactam having from 6 to 24 carbon atoms.

In a further embodiment the aliphatic polyamide is made from a mixture of i) a polyamide made from an aliphatic dicarboxylic acid and an aliphatic diamine, each having from 6 to 24 carbon atoms and ii) a polyamide made from an aliphatic aminoacid or lactam having from 6 to 24 carbon atoms.

Particularly preferred polyamides are nylon 66, nylon 6 and mixtures thereof. For nylon 6 intrinsic viscosities (IV) in the range of 0.85 to 1.4 dl/g may be used. It is preferred that the intrinsic viscosity be in the range of 0.95 to 1.2 dl/g. Intrinsic viscosity is measured at 25°C in formic acid (85 wt.% acid to 15 wt.% water) by methods known in the art. An especially preferred polyamide is nylon 66 having a relative viscosity (RV) in the range of 40 to 80, particularly 45 to 60. Relative viscosity is the ratio of viscosity at 25°C of an 8.4 wt.% solution of nylon in 90 wt.% formic acid (90 wt.% acid to 10 wt.% water) to the viscosity at 25°C of the 90 wt.% formic acid alone. The polyamide may be a blend of polyamides, e.g. nylon 66 having a relative viscosity of 45 and nylon 66 having a relative viscosity of 65. The polyamide may also be a blend of different polyamides, e.g. nylon 6 and nylon 66.

In another embodiment the grafted alpha-olefin copolymer is selected from the group consisting of grafted homopolymers of ethylene, grafted homopolymers of propylene, grafted homopolymers of butene-1, grafted copolymers of ethylene and a $C_3$ to $C_{10}$ alpha-olefin, grafted ethylene/propylene elastomers, grafted polystyrene, grafted copolymers of ethylene and acrylic acid, grafted copolymers of ethylene and methacrylic acid, grafted copolymers of ethylene and vinyl acetate, and grafted ionomeric polymers derived from copolymers of ethylene and acrylic acid or methacrylic acid.

In another embodiment the grafted alpha-olefin copolymer is, a grafted copolymer of ethylene and/or propylene with at least one of butene-1, hexene-1, 4-methyl pentene-1 and octene-1.

In a preferred embodiment the grafted alpha-olefin polymer is grafted polypropylene.

In a particularly preferred embodiment the grafted alpha-olefin is grafted polypropylene, present in the release film in the amount of from 10 to 20 wt.%, and especially a grafted polypropylene having a melt index of from 15 to 30 dg/min.

In one embodiment the grafted alpha-olefin polymer is grafted with a grafting monomer selected from the group consisting of ethylenically unsaturated $C_3$-$C_{10}$ carboxylic acids, ethylenically unsaturated $C_3$-$C_{10}$ carboxylic acid anhydrides, derivatives of such acids or anhydrides, ethylenically unsaturated hydrocarbons with other functional groups, and mixtures thereof.

In a further embodiment the grafting monomer is selected from the group consisting of acrylic acid, methacrylic acid, maleic acid, fumaric acid, itaconic acid, crotonic acid, 5-norbornene-2,3dicarboxylic acid, methyl-5-norbornene-2,3dicarboxylic acid, maleic anhydride, dimethylmaleic anhydride, monosodium maleate, disodium maleate, acrylamide, itaconic anhydride, citraconic anhydride, maleimide, N-phenylmaleimide, diethyl fumarate, vinyl pyridines, vinyl silanes, 4-vinyl pyridine, vinyltriethoxysilane and allyl alcohol.

In yet another embodiment the grafting monomer consists of at least tvo grafting monomers wherein one of the grafting monomers is selected from the group consisting of styrene, 2-methyl styrene, 4-methyl styrene, alpha-methyl styrene, beta-methyl styrene, 4-vinyl anisole, stilbene and indene, and mixtures thereof, and the other of the grafting monomers is selected from the group consisting of maleic anhydride, itaconic anhydride, citraconic anhydride, maleimide and N-phenylmaleimide, and mixtures thereof.

In another embodiment the grafting monomer is present in the grafted polymer in an amount of from 0.05 to 2 wt.%.

In a preferred embodiment the grafting monomer is present in the graft polymer in an amount of from 0.05 to 0.5 wt.%.

In further embodiments the grafted alpha-olefin copolymer has a melt index, as determined by the procedure of ASTM D-1238 (Condition E), of from 10 to 50 dg/min, especially from 15 to 30 dg/min.

A number of methods have been developed for grafting monomers onto hydrocarbon polymers. For instance, the grafting of monomers onto molten polymers is known, e.g. as described in U.S. 4 612 155 to C.S. Wong and R.A. Zelonka, which issued 1986 September 16. A process in which a mixture of styrene and maleic anhydride is formed and then reacted with a polymer having active hydrogen atoms at a temperature above about $120\frac{1}{2}$ C is disclosed in Canadian Patent 907 248 of N.G. Gaylord, which issued 1972 August 08. A similar process is also disclosed by N.G. Gaylord et al. in Polymer Letters Vol. 10, pp 95-100 (1972). A process for modifying rheological or chemical and rheological properties of a polymer in which monomers are grafted on to a polymer in an extruder is disclosed in Canadian Patent 993 592 of R.A. Steinkamp et al., which issued 1976 July 20.

The films of the present invention may be dyed with thermally stable nylon compatible dyes, e.g. FILAMID (trade mark) Yellow R dye, or pigmented with thermally stable nylon or graft polymer compatible pigments, e.g. titanium dioxide.

The invention may be illustrated by reference to the following examples:

Example I

Films from several compositions within the scope of the present invention were prepared. Granular polyamide resin was mixed with pellets of the grafted polyolefin and the mixture was then melt extruded and cast into film having a thickness of 25μm, using a Werner and Pfleiderer Corporation 53 mm twin screw extruder combined with a film forming die and a chill roll casting machine. In the case of those compositions containing a pigment, the pigment was either added in the form of a pigment-containing polyamide resin or in the form of a pigment containing-polyolefin. The films so formed were tested for release characteristics using an apparatus which was adapted to grasp the end of a 2.5 cm wide strip of film and to strip the film from a slab of sheet moulding compound at a constant rate of 1.5 cm/s. The apparatus was also adapted to determine the force required to strip the film. In the following table, the columns marked "Force" indicate the force required to strip the release film from the sheet moulding compound, expressed as a percentage of the force required to strip a commercially available release film, CAPRAN ER20 (trade mark) film which is believed to be made from a blend of nylon 6 and an ethylene/vinyl acetate copolymer, containing titanium dioxide. The accuracy of measurement of force is ±10%.

Table 1

| Composition | SMC Paste | Force | | % Grafted Polymer |
|---|---|---|---|---|
| | | 7 days | 14 days | |
| 1817-173-55 | Appliance | 80 | 95 | 3* |
| 1817-186-62 | Appliance | 25 | 30 | 12 |
| 1817-173-52 | Appliance | 96 | 100 | 3.75* |
| 1817-186-64 | Appliance | 30 | 55 | 15 |
| 1817-186-62 | Automotive | 50 | | 12 |
| 1826-11-244 | Appliance | 30 | 15 | 15 |
| 1826-11-244 | Automotive | 30 | 35 | 15 |
| 1826-03-172 | Appliance | 30 | 25 | 15 |
| 1826-03-174 | Appliance | 35 | 35 | 15 |
| 1826-03-172 | Automotive | 45 | | 15 |
| 1826-03-175 | Appliance | 30 | 35 | 15 |
| 973-07-111 | Appliance | | 50 | 17 |
| 973-07-124 | Appliance | | 35 | 17 |
| 973-07-134 | Appliance | | 45 | 17 |

* Outside the scope of the present invention; included for reference only.

The specific compositions are as shown in Table 2.

4

Table 2

| Composition | |
|---|---|
| 1817-173-55 | 3% MAH-g-PE, 9% PP, 3% E/P |
| 1817-173-52 | 3.75% MAH-g-EP, 11.25% PP |
| 1817-186-62 | 12% MAH-g-PP1, 1% PE, 1% $TiO_2$ |
| 1817-186-64 | 15% MAH-g-PP1, 1% PE, 1% $TiO_2$ 2% |
| 1826-11-244 | 15% MAH-g-PP |
| 1826-03-172 | 15% MAH-g-PP, 1% PE, 1% $TiO_2$ |
| 1826-03-174 | 15% MAH-g-PP, 1% PE, 1% $TiO_2$ |
| 1826-03-175 | 15% MAH-g-PP, 1% PE, 1% $TiO_2$ |
| 973-07-111 | 17% MAH-g-PP, 2.5% PE, 0.84% $TiO_2$ |
| 973-07-124 | 17% MAH-g-PP, 2.5% PE, 0.84% $TiO_2$ |
| 973-07-134 | 17% MAH-g-PP, 2.5% PE, 0.84% $TiO_2$ |

the remainder of the compositions consisting of nylon 66 having an RV of 52 wherein:
PE is low density polyethylene used as a carrier for $TiO_2$;
PP is SHELL GE 6100 (trade mark) polypropylene homopolymer;
E/P is PROFAX 7701 (trade mark)
ethylene/propylene copolymer;
MAH-g-EP is PROFAX 7701 ethylene/propylene
copolymer grafted with 0.08 % maleic anhydride;
MAH-g-PE is SCLAIR 19C (trade mark)
polyethylene grafted with 1.0 wt.% maleic anhydride (a 80:20 blend of E/P:g-PE has a melt index of 1.3);
MAH-g-PP is SHELL GE 6100 polypropylene grafted with 0.14 wt.% maleic anhydride, the grafted polymer having a melt flow index of 30;
MAH-g-PP1 is SHELL GE 6100 polypropylene grafted with 0.14 wt.% maleic anhydride, the grafted polymer having a melt flow index of 42;
and $TiO_2$ is titanium dioxide.

For comparative purposes an attempt was made to form a film from nylon 66 and 17 wt.% ungrafted polypropylene having a melt flow index of 16-24 and 0.1 wt.% FILAMID yellow dye, using methods similar to that for the other films hereinabove. The film had very poor physical integrity and was not useful as a release film.

**Claims**

1. The use of a film made from an extruded blend comprising from 5 to 25 wt.% of a grafted $C_2$-$C_{20}$ alphaolefin polymer and from 95 to 75 wt.% of an aliphatic polyamide, the melt viscosities of said polyamide and graft polyolefin being selected such that the blend is homogeneous, as a release film of a SMC composite.

2. A use according to claim 1 wherein the aliphatic polyamide is made from an aliphatic dicarboxylic acid and an aliphatic diamine, each having from 6 to 24 carbon atoms.

3. A use according to claim 1 wherein the aliphatic polyamide is made from an aliphatic amino acid or lactam having from 6 to 24 carbon atoms.

4. A use according to claim 1 wherein the aliphatic polyamide is made from a mixture of i) a polyamide made from an aliphatic dicarboxylic acid and an aliphatic diamine, each having from 6 to 24 carbon atoms and ii) a polyamide made from an aliphatic amino acid or lactam having from 6 to 24 carbon atoms.

5. A use according to claim 1 wherein the aliphatic polyamide is selected from the group consisting of nylon 66, nylon 6 and mixtures thereof.

6. A use according to claim 5 wherein the nylon is nylon 66 having a relative viscosity of from 40 to 80.

7. A use according to claim 5 wherein the nylon is nylon 66 having a relative viscosity of from 45 to 60.

8. A use according to claim 5 wherein the nylon is nylon 6 having an intrinsic viscosity of from 0.85 to 1.4 dl/g.

9. A use according to claim 5 wherein the nylon is nylon 6 having an intrinsic viscosity of from 0.95 to 1.2 dl/g.

10. A use according to any preceding claim wherein the grafted alpha-olefin polymer is grafted with a grafting monomer selected from the group consisting of acrylic acid, methacrylic acid, maleic acid, fumaric acid, itaconic acid, crotonic acid, 5-norbornene-2,3 dicarboxylic acid, methyl-5-norbornene-2,3 dicarboxylic acid, maleic anhydride, dimethylmaleic anhydride, monosodium maleate, disodium maleate, acrylamide, itaconic anhydride, citraconic anhydride, maleimide, N-phenylmaleimide, diethyl fumarate, vinyl pyridines, vinyl silanes, 4-vinyl pyridine, vinyltriethoxysilane and allyl alcohol.

11. A use according to claim 10 wherein the grafted alpha-olefin polymer is selected from the group consisting of grafted homopolymers of ethylene, grafted homopolymers of propylene, grafted ethylene/$C_3$ to $C_{10}$ alpha-olefin copolymers and grafted ethylene/vinyl acetate copolymers.

12. A use according to claim 10 or claim 11 wherein the grafting monomer is maleic acid, maleic anhydride or fumaric acid.

13. A use according to claim 10 or claim 11 wherein the grafting monomer consists of at least two grafting monomers wherein one of the grafting monomers is selected from the group consisting of styrene, 2-methyl styrene, 4-methyl styrene, alpha-methyl styrene, beta-methyl styrene, 4-vinyl anisole, stilbene and indene, and mixtures thereof, and the other of the grafting monomers is selected from the group consisting of maleic anhydride, itaconic anhydride, citraconic anhydride, maleimide and N-phenylmaleimide, and mixtures thereof.

14. A use according to claim 12 or claim 13 wherein the grafting monomer is present in the graft polymer in an amount of from 0.05 to 2 wt.%.

15. A use according to claim 12 or claim 13 wherein the grafting monomer is present in the graft polymer in an amount of from 0.05 to 0.5 wt.%.

16. A use according to claim 1 wherein the grafted alpha-olefin polymer is a grafted copolymer of ethylene and/or propylene with at least one of butene-1, hexene-1, 4-methyl pentene-1 and octene-1.

17. A use according to claim 1 wherein the grafted alpha-olefin copolymer is grafted polypropylene, present in the release film in the amount of from 10 to 20 wt.%.

18. A method of forming SMC composite comprising applying a film made from an extruded blend comprising from 5 to 25 wt.% of a grafted $C_2$-$C_{20}$ alpha-olefin polymer and from 95 to 75 wt.% of an aliphatic polyamide, the melt viscosities of said polyamide and graft polyolefin being selected such that the blend is homogeneous, as at least one of the release sheets of the composite.

19. A method according to claim 18 wherein the aliphatic polyamide is made from an aliphatic dicarboxylic acid and an aliphatic diamine, each having from 6 to 24 carbon atoms.

20. A method according to claim 18 wherein the aliphatic polyamide is made from an aliphatic amino acid or lactam having from 6 to 24 carbon atoms.

21. A method according to claim 18 wherein the aliphatic polyamide is made from a mixture of i) a polyamide made from an aliphatic dicarboxylic acid and an aliphatic diamine, each having from 6 to 24 carbon atoms and ii) a polyamide made from an aliphatic amino acid or lactam having from 6 to 24 carbon atoms.

**22.** A method according to claim 18 wherein the aliphatic polyamide is selected from the group consisting of nylon 66, nylon 6 and mixtures thereof.

**23.** A method according to claim 22 wherein the nylon is nylon 66 having a relative viscosity of from 40 to 80.

**24.** A method according to claim 22 wherein the nylon is nylon 66 having a relative viscosity of from 45 to 60.

**25.** A method according to claim 22 wherein the nylon is nylon 6 having an intrinsic viscosity of from 0.85 to 1.4 dl/g.

**26.** A method according to claim 22 wherein the nylon is nylon 6 having an intrinsic viscosity of from 0.95 to 1.2 dl/g.

**27.** A method according to any of claims 18 to 26 wherein the grafted alpha-olefin polymer is grafted with a grafting monomer selected from the group consisting of acrylic acid, methacrylic acid, maleic acid, fumaric acid, itaconic acid, crotonic acid, 5-norbornene-2,3 dicarboxylic acid, methyl-5-norbornene-2,3 dicarboxylic acid, maleic anhydride, dimethylmaleic anhydride, monosodium maleate, disodium maleate, acrylamide, itaconic anhydride, citraconic anhydride, maleimide, N-phenylmaleimide, diethyl fumarate, vinyl pyridines, vinyl silanes, 4-vinyl pyridine, vinyltriethoxysilane and allyl alcohol.

**28.** A method according to claim 27 wherein the grafted alpha-olefin polymer is selected from the group consisting of grafted homopolymers of ethylene, grafted homopolymers of propylene, grafted ethylene/$C_3$ to $C_{10}$ alpha-olefin copolymers and grafted ethylene/vinyl acetate copolymers.

**29.** A method according to claim 27 or claim 28 wherein the grafting monomer is maleic acid, maleic anhydride or fumaric acid.

**30.** A method according to claim 27 or claim 28 wherein the grafting monomer consists of at least two grafting monomers wherein one of the grafting monomers is selected from the group consisting of styrene, 2-methyl styrene, 4-methyl styrene, alpha-methyl styrene, beta-methyl styrene, 4-vinyl anisole, stilbene and indene, and mixtures thereof, and the other of the grafting monomers is selected from the group consisting of maleic anhydride, itaconic anhydride, citraconic anhydride, maleimide and N-phenylmaleimide, and mixtures thereof.

**31.** A method according to claim 29 or claim 30 wherein the grafting monomer is present in the graft polymer in an amount of from 0.05 to 2 wt.%.

**32.** A method according to claim 29 or claim 30 wherein the grafting monomer is present in the graft polymer in an amount of from 0.05 to 0.5 wt.%.

**33.** A method according to claim 18 wherein the grafted alpha-olefin polymer is a grafted copolymer of ethylene and/or propylene with at least one of butene-1, hexene-1, 4-methyl pentene-1 and octene-1.

**34.** A method according to claim 28 wherein the grafted alpha-olefin copolymer is grafted polypropylene, present in the release film in the amount of from 10 to 20 wt.%.

**Patentansprüche**

**1.** Verwendung einer Folie aus einem extrudierten Gemisch, das 5-25 Gew.-% eines gepfropften $C_2$-$C_{20}$-alpha-Olefinpolymers und 95-75 Gew.-% eines aliphatischen Polyamids aufweist, wobei die Schmelzviskosität des Polyamids und Propfpolyolefins derart gewählt ist, daß das Gemisch homogen ist, als eine Trennfolie eines SMC-Verbundstoffs.

**2.** Verwendung nach Anspruch 1, wobei das aliphatische Polyamid aus einer aliphatischen Dicarbonsäure und einem aliphatischen Diamin besteht, die jeweils 6-24 Kohlenstoffatome haben.

3. Verwendung nach Anspruch 1, wobei das aliphatische Polyamid aus einer aliphatischen Aminosäure oder Lactam mit 6-24 Kohlenstoffatomen besteht.

4. Verwendung nach Anspruch 1, wobei das aliphatische Polyamid aus einem Gemisch besteht aus i) einem Polyamid aus einer aliphatischen Dicarbonsäure und einem aliphatischen Diamin, die jeweils 6-24 Kohlenstoffatome haben, und ii) einem Polyamid aus einer aliphatischen Aminosäure oder Lactam mit 6-24 Kohlenstoffatomen.

5. Verwendung nach Anspruch 1, wobei das aliphatische Polyamid aus der Gruppe ausgewählt ist, die aus Nylon 66, Nylon 6 und Gemischen davon besteht.

6. Verwendung nach Anspruch 5, wobei das Nylon Nylon 66 ist, das eine relative Viskosität von 40-80 hat.

7. Verwendung nach Anspruch 5, wobei das Nylon Nylon 66 ist, das eine relative Viskosität von 45-60 hat.

8. Verwendung nach Anspruch 5, wobei das Nylon Nylon 6 ist, das eine innere Viskosität von 0,85-1,4 dl/g hat.

9. Verwendung nach Anspruch 5, wobei das Nylon Nylon 6 ist, das eine innere Viskosität von 0,95-1,2 dl/g hat.

10. Verwendung nach einem der vorhergehenden Ansprüche, wobei das gepfropfte alpha-Olefinpolymer mit einem Pfropfmonomer gepfropft ist, das aus der Gruppe ausgewählt ist, die besteht aus: Acrylsäure, Methacrylsäure, Maleinsäure, Fumarsäure, Itaconsäure, Crotonsäure, 5-Norbornen-2,3-dicarbonsäure, Methyl-5-norbornen-2,3-dicarbonsäure, Maleinsäureanhydrid, Dimethylmaleinsäureanhydrid, Mononatriummaleat, Dinatriummaleat, Acrylamid, Itaconsäureanhydrid, Citraconsäureanhydrid, Maleinimid, N-Phenylmaleinimid, Diethylfumarat, Vinylpyridinen, Vinylsilanen, 4-Vinylpyridin, Vinyltriethoxysilan und Allylalkohol.

11. Verwendung nach Anspruch 10, wobei das gepfropfte alpha-Olefinpolymer aus der Gruppe ausgewählt ist, die besteht aus: gepfropften Homopolymeren von Ethylen, gepfropften Homopolymeren von Propylen, gepfropften Ethylen/$C_3$-$C_{10}$-alpha-olefin-Copolymeren und gepfropften Ethylen/Vinylacetat-Copolymeren.

12. Verwendung nach Anspruch 10 oder 11, wobei das Pfropfmonomer Maleinsäure, Maleinsäureanhydrid oder Fumarsäure ist.

13. Verwendung nach Anspruch 10 oder 11, wobei das Pfropfmonomer aus mindestens zwei Pfropfmonomeren besteht, wobei eines der Pfropfmonomere aus der Gruppe ausgewählt ist, die besteht aus: Styrol, 2-Methylstyrol, 4-Methylstyrol, alpha-Methylstyrol, beta-Methylstyrol, 4-Vinylanisol, Stilben und Inden und Gemischen davon, und das andere der Pfropfmonomere aus der Gruppe ausgewählt ist, die besteht aus: Maleinsäureanhydrid, Itaconsäureanhydrid, Citraconsäureanhydrid, Maleinimid und N-Phenylmaleinimid und Gemischen davon.

14. Verwendung nach Anspruch 12 oder 13, wobei das Pfropfmonomer in dem Pfropfpolymer in einer Menge von 0,05-2 Gew.-% anwesend ist.

15. Verwendung nach Anspruch 12 oder 13, wobei das Pfropfmonomer in dem Pfropfpolymer in einer Menge von 0,05-0,5 Gew.-% anwesend ist.

16. Verwendung nach Anspruch 1, wobei das gepfropfte alpha-Olefinpolymer ein gepfropftes Copolymer von Ethylen und/oder Propylen mit mindestens einem von Buten-1, Hexen-1, 4-Methylpenten-1 und Octen-1 ist.

17. Verwendung nach Anspruch 1, wobei das gepfropfte alpha-Olefin-Copolymer gepfropftes Polypropylen ist, das in der Trennfolie in einer Menge von 10-20 Gew.-% anwesend ist.

8

**18.** Verfahren zum Herstellen von SMC-Verbundstoff, das folgenden Schritt aufweist: Aufbringen einer Folie aus einem extrudierten Gemisch, das 5-25 Gew.-% eines gepfropften $C_2$-$C_{20}$-alpha-Olefinpolymers und 95-75 Gew.-% eines aliphatischen Polyamids aufweist, wobei die Schmelzviskosität des Polyamids und des Pfropfpolyolefins derart gewählt ist, daß das Gemisch homogen ist, als mindestens eine der Trennfolien des Verbundstoffs.

**19.** Verfahren nach Anspruch 18, wobei das aliphatische Polyamid aus einer aliphatischen Dicarbonsäure und einem aliphatischen Diamin besteht, die jeweils 6-24 Kohlenstoffatome haben.

**20.** Verfahren nach Anspruch 18, wobei das aliphatische Polyamid aus einer aliphatischen Aminosäure oder Lactam mit 6-24 Kohlenstoffatomen besteht.

**21.** Verfahren nach Anspruch 18, wobei das aliphatische Polyamid aus einem Gemisch besteht aus i) einem Polyamid aus einer aliphatischen Dicarbonsäure und einem aliphatischen Diamin, die jeweils 6-24 Kohlenstoffatome haben, und ii) einem Polyamid aus einer aliphatischen Aminosäure oder Lactam mit 6-24 Kohlenstoffatomen.

**22.** Verfahren nach Anspruch 18, wobei das aliphatische Polyamid aus der Gruppe ausgewählt wird, die aus Nylon 66, Nylon 6 und Gemischen davon besteht.

**23.** Verfahren nach Anspruch 22, wobei das Nylon Nylon 66 ist, das eine relative Viskosität von 40-80 hat.

**24.** Verfahren nach Anspruch 22, wobei das Nylon Nylon 66 ist, das eine relative Viskosität von 45-60 hat.

**25.** Verfahren nach Anspruch 22, wobei das Nylon Nylon 6 ist, das eine innere Viskosität von 0,85-1,4 dl/g hat.

**26.** Verfahren nach Anspruch 22, wobei das Nylon Nylon 6 ist, das eine innere Viskosität von 0,95-1,2 dl/g hat.

**27.** Verfahren nach einem der Ansprüche 18 bis 26, wobei das gepfropfte alpha-Olefinpolymer mit einem Pfropfmonomer gepfropft wird, das aus der Gruppe ausgewählt ist, die besteht aus: Acrylsäure, Methacrylsäure, Maleinsäure, Fumarsäure, Itaconsäure, Crotonsäure, 5-Norbornen-2,3-dicarbonsäure, Methyl-5-norbornen-2,3-dicarbonsäure, Maleinsäureanhydrid, Dimethylmaleinsäureanhydrid, Mononatriummaleat, Dinatriummaleat, Acrylamid, Itaconsäureanhydrid, Citraconsäureanhydrid, Maleinimid, N-Phenylmaleinimid, Diethylfumarat, Vinylpyridinen, Vinylsilanen, 4-Vinylpyridin, Vinyltriethoxysilan und Allylalkohol.

**28.** Verfahren nach Anspruch 27, wobei das gepfropfte alpha-Olefinpolymer aus der Gruppe ausgewählt wird, die besteht aus: gepfropften Homopolymeren von Ethylen, gepfropften Homopolymeren von Propylen, gepfropften Ethylen/$C_3$-$C_{10}$-alpha-Olefin-Copolymeren und gepfropften Ethylen/Vinylacetat-Copolymeren.

**29.** Verfahren nach Anspruch 27 oder 28, wobei das Pfropfmonomer Maleinsäure, Maleinsäureanhydrid oder Fumarsäure ist.

**30.** Verfahren nach Anspruch 27 oder 28, wobei das Pfropfmonomer aus mindestens zwei Pfropfmonomeren besteht, wobei eines der Pfropfmonomere aus der Gruppe ausgewählt ist, die besteht aus: Styrol, 2-Methylstyrol, 4-Methylstyrol, alpha-Methylstyrol, beta-Methylstyrol, 4-Vinylanisol, Stilben und Inden und Gemischen davon, und das andere der Pfropfmonomere aus der Gruppe ausgewählt ist, die besteht aus: Maleinsäureanhydrid, Itaconsäureanhydrid, Citraconsäureanhydrid, Maleinimid und N-Phenylmaleinimid und Gemischen davon.

**31.** Verfahren nach Anspruch 29 oder 30, wobei das Pfropfmonomer in dem Pfropfpolymer in einer Menge von 0,05-2 Gew.-% anwesend ist.

**32.** Verfahren nach Anspruch 29 oder 30, wobei das Pfropfmonomer in dem Pfropfpolymer in einer Menge von 0,05-0,5 Gew.-% anwesend ist.

**33.** Verfahren nach Anspruch 18, wobei das gepfropfte alpha-Olefinpolymer ein gepfropftes Copolymer von Ethylen und/oder Propylen mit mindestens einem von Buten-1, Hexen-1, 4-Methylpenten-1 und Octen-1 ist.

**34.** Verfahren nach Anspruch 28, wobei das gepfropfte alpha-Olefin-Copolymer gepfropftes Polypropylen ist, das in der Trennfolie in einer Menge von 10-20 Gew.-% anwesend ist.

**Revendications**

**1.** L'utilisation, en tant que pellicule détachable d'un composite SMC (mélange à mouler en feuille), d'une pellicule réalisée à partir d'un mélange extrudé comprenant de 5 à 25 % en poids d'un polymère d'alpha-oléfine $C_2$-$C_{20}$ greffée et de 95 à 75 % en poids d'un polyamide aliphatique, les viscosités en fusion des dits polyamide et polyoléfine greffée étant choisies de telle façon que le mélange soit homogène.

**2.** Une utilisation selon la Revendication 1, dans laquelle le polyamide aliphatique est produit à partir d'un acide dicarboxylique aliphatique et d'une diamine aliphatique possédant chacun de 6 à 24 atomes de carbone.

**3.** Une utilisation selon la Revendication 1, dans laquelle le polyamide aliphatique est produit à partir d'un acide aminé aliphatique ou d'un lactame possédant entre 6 et 24 atomes de carbone.

**4.** Une utilisation selon la Revendication 1, dans laquelle le polyamide aliphatique est produit à partir d'un mélange (i) d'un polyamide produit à partir d'un acide dicarboxylique aliphatique et d'une diamine aliphatique possédant chacun de 6 à 24 atomes de carbone et (ii) d'un polyamide produit à partir d'un acide aminé aliphatique ou d'un lactame possédant entre 6 et 24 atomes de carbone.

**5.** Une utilisation selon la Revendication 1, dans laquelle le polyamide aliphatique est choisi dans le groupe composé du nylon 66, du nylon 6 et de leurs mélanges.

**6.** Une utilisation selon la Revendication 5, dans laquelle le nylon est le nylon 66 ayant une viscosité relative comprise entre 40 et 80.

**7.** Une utilisation selon la Revendication 5, dans laquelle le nylon est le nylon 66 ayant une viscosité relative comprise entre 45 et 60.

**8.** Une utilisation selon la Revendication 5, dans laquelle le nylon est le nylon 6 ayant une viscosité intrinsèque comprise entre 0,85 et 1,4 dl/g.

**9.** Une utilisation selon la Revendication 5, dans laquelle le nylon est le nylon 6 ayant une viscosité intrinsèque comprise entre 0,95 et 1,2 dl/g.

**10.** Une utilisation selon l'une quelconque des Revendications précédentes, dans laquelle le polymère d'alpha-oléfine greffée est greffé avec un monomère de greffage choisi dans le groupe composé de l'acide acrylique, de l'acide méthacrylique, de l'acide maléique, de l'acide fumarique, de l'acide itaconique, de l'acide crotonique, de l'acide 5-norbornène-2,3 dicarboxylique, de l'acide méthyl-5-norbornène-2,3 dicarboxylique, de l'anhydride maléique, de l'anhydride diméthylmaléique, du maléate monosodique, du maléate disodique, de l'acrylamide, de l'anhydride itaconique, de l'anhydride citraconique, de la maléimide, de la N-phénylmaléimide, du fumarate d'éthyle, des pyridines vinyliques, des silanes vinyliques, de la 4-vinyl pyridine, de vinyltriéthoxysilane et de l'alcool allylique.

**11.** Une utilisation selon la Revendication 10, dans laquelle le polymère d'alpha-oléfine greffée est choisi dans le groupe composé des homopolymères greffés de l'éthylène, des homopolymères greffés du propylène, des copolymères greffés éthylène / alpha-oléfine $C_3$ à $C_{10}$ et des copolymères greffés éthylène / acétate de vinyle.

**12.** Une utilisation selon la Revendication 10 ou la Revendication 11 dans lequel le monomère de greffage est l'acide maléique, l'anhydride maléique ou l'acide fumarique.

**13.** Une utilisation selon la Revendication 10 ou la Revendication 11, dans laquelle le monomère de greffage est composé d'au moins deux monomères de greffage dans lequel l'un des monomères de greffage est choisi dans le groupe constitué du styrène, du 2-méthylstyrène, du 4-méthylstyrène, de l'alpha-méthylstyrène, du béta-méthylstyrène, du 4-vinyl anisol, du stilbène et de l'indène, et de mélanges de ceux-ci, et l'autre des monomères de greffage est choisi dans le groupe constitué de l'anhydride maléique, de l'anhydride itaconique, de l'anhydride citraconique, de la maléimide et de la N-phénylmaléimide, et de mélanges de ceux-ci.

**14.** Une utilisation selon la Revendication 12 ou la Revendication 13, dans laquelle le monomère de greffage est présent dans le polymère greffé dans une proportion comprise entre 0,05 et 2% en poids.

**15.** Une utilisation selon la Revendication 12 ou la Revendication 13, dans laquelle le monomère de greffage est présent dans le polymère greffé dans une proportion comprise entre 0,05 et 0,5 % en poids.

**16.** Une utilisation selon la Revendication 1, dans laquelle le polymère d'alpha-oléfine greffée est un copolymère greffé d'éthylène et/ou de propylène avec au moins un parmi le butène-1, l'hexène-1, le 4-méthyl pentène-1 et octène-1.

**17.** Une utilisation selon la Revendication 1, dans laquelle le copolymère d'alpha-oléfine greffée est du polypropylène greffé présent dans la pellicule détachable dans une proportion comprise entre 10 et 20 % en poids.

**18.** Un procédé de formation d'un composite SMC comprenant l'application, en tant qu'au moins une des pellicules détachables du composite, d'une pellicule réalisée à partir d'un mélange extrudé comprenant de 5 à 25 % en poids d'un polymère d'alpha-oléfine $C_2$-$C_{20}$ greffée et de 95 à 75 % en poids d'un polyamide aliphatique, les viscosités en fusion des dits polyamide et polyoléfine greffée étant choisies de telle façon que le mélange soit homogène.

**19.** Un procédé selon la Revendication 18, dans lequel le polyamide aliphatique est produit à partir d'un acide dicarboxylique aliphatique et d'une diamine aliphatique possédant chacun de 6 à 24 atomes de carbone.

**20.** Un procédé selon la Revendication 18, dans lequel le polyamide aliphatique est produit à partir d'un acide aminé aliphatique ou d'un lactame possédant entre 6 et 24 atomes de carbone.

**21.** Un procédé selon la Revendication 18, dans lequel le polyamide aliphatique est produit à partir d'un mélange (i) d'un polyamide produit à partir d'un acide dicarboxylique aliphatique et d'une diamine aliphatique possédant chacun de 6 à 24 atomes de carbone et (ii) d'un polyamide produit à partir d'un acide aminé aliphatique ou d'un lactame possédant entre 6 et 24 atomes de carbone.

**22.** Un procédé selon la Revendication 18, dans lequel le polyamide aliphatique est choisi dans le groupe composé du nylon 66, du nylon 6 et de leurs mélanges.

**23.** Un procédé selon la Revendication 22, dans lequel le nylon est le nylon 66 ayant une viscosité relative comprise entre 40 et 80.

**24.** Un procédé selon la Revendication 22, dans lequel le nylon est le nylon 66 ayant une viscosité relative comprise entre 45 et 60.

**25.** Un procédé selon la Revendication 22, dans lequel le nylon est le nylon 6 ayant une viscosité intrinsèque comprise entre 0,85 et 1,4 dl/g.

**26.** Un procédé selon la Revendication 22, dans lequel le nylon est le nylon 6 ayant une viscosité intrinsèque comprise entre 0,95 et 1,2 dl/g.

**27.** Un procédé selon l'une quelconque des Revendications 18 à 26, dans lequel le polymère d'alpha-oléfine greffée est greffé avec un monomère de greffage choisi dans le groupe composé de l'acide acrylique, de l'acide méthacrylique, de l'acide maléique, de l'acide fumarique, de l'acide itaconique, de l'acide crotonique, de l'acide 5-norbornène-2,3 dicarboxytique, de l'acide méthyl-5-norbornène-2,3 dicarboxylique, de l'anhydride maléique, de l'anhydride diméthylmaléique, du maléate monosodique, du maléate disodique, de l'acrylamide, de l'anhydride itaconique, de l'anhydride citraconique, de la maléimide, de la N-phénylmaléimide, du fumarate d'éthyle, des pyridines vinyliques, des silanes vinyliques, de la 4-vinyl pyridine, du vinyltriéthoxysilane et de l'alcool allylique.

28. Un procédé selon la Revendication 27, dans lequel le polymère d'alpha-oléfine greffée est choisi dans le groupe composé des homopolymères greffés de l'éthylène, des homopolymères greffés du propylène, des copolymères greffés éthylène / alpha-oléfine $C_3$ à $C_{10}$ et des copolymères greffés éthylène / acétate de vinyle.

29. Un procédé selon la Revendication 27 ou la Revendication 28, dans lequel le monomère de greffage est l'acide maléique, l'anhydride maléique ou l'acide fumarique.

30. Un procédé selon la Revendication 27 ou la Revendication 28, dans lequel le monomère de greffage est composé d'au moins deux monomères de greffage dans lequel l'un des monomères de greffage est choisi dans le groupe constitué du styrène, du 2-méthylstyrène, du 4-méthylstyrène, de l'alpha-méthylstyrène, du béta-méthylstyrène, du 4-vinyl anisol, du stilbène et de l'indène, et de mélanges de ceux-ci, et l'autre des monomères de greffage est choisi dans le groupe constitué de l'anhydride maléique, de l'anhydride itaconique, de l'anhydride citraconique, de la maléimide et de la N-phénylmaléimide, et de mélanges de ceux-ci.

31. Un procédé selon la Revendication 29 ou la Revendication 30, dans lequel le monomère de greffage est présent dans le polymère greffé dans une proportion comprise entre 0,05 et 2 % en poids.

32. Un procédé selon la Revendication 29 ou la Revendication 30, dans lequel le monomère de greffage est présent dans le polymère greffé dans une proportion comprise entre 0,05 et 0,5 % en poids.

33. Un procédé selon la Revendication 18, dans lequel le polymère d'alpha-oléfine greffée est un copolymère greffé d'éthylène et/ou de propylène avec au moins un parmi le butène-1, 1'-hexène-1, le 4-méthyl pentène-1 et octène-1.

34. Un procédé selon la Revendication 28, dans lequel le copolymère d'alpha-oléfine greffée est du polypropylène greffé présent dans la pellicule détachable dans une proportion comprise entre 10 et 20 % en poids.